# EUROPÄISCHE PATENTANMELDUNG

(11) **EP 1 426 563 A1**
(43) Veröffentlichungstag der Anmeldung: **09.06.2004**
(21) Anmeldenummer: 02026896.7
(22) Anmeldetag: 03.12.2002
(51) Int. Cl.: F01D 25/24, F01D 11/00, F02C 6/12, F01D 17/16

(54) **Turbolader mit keramischer oder metallischer Hitzeisolierung zwischen Turbinen- und Lagergehäuse**

(71) Anmelder: BorgWarner Inc., Auburn Hills, MI 48326 (US)
(72) Erfinder: Scherrer, Frank, 67245 Ludwigshafen (DE)
(74) Vertreter: Balsters, Robert

(57) **Zusammenfassung**

Ein Turbolader (1) weist eine Welle (18) auf, an deren beiden Enden je ein Rotor befestigbar ist. Ferner sind ein Lagergehäuse (4) zum Lagern der Welle (18) und ein Turbinengehäuse (2) vorgesehen, das mit einer Öffnung dem Lagergehäuse (2) gegenüberliegt, so daß ein Endteil (5) des Lagergehäuses (4) an den die Öffnung berandenden Wandungen (33) des Turbinengehäuses befestigbar ist. Im Bereich zwischen dem Endteil (5) des Lagergehäuses (4) und dem Turbinengehäuse (2) ist mindestens eine hitzebeständige, aus einem Mineralstoff oder Metall bestehende Dichtung (17, 31) vorgesehen.

## Beschreibung

### Gebiet der Erfindung

Die vorliegende Erfindung bezieht sich auf einen Turbolader mit einer Welle, an deren beiden Enden je ein Rotor, nämlich ein Turbinenrotor und ein Kompressorrotor, befestigbar ist, einem Lagergehäuse zum Lagern der Welle, und einem Turbinengehäuse, das dem Lagergehäuse gegenüberliegt, so daß ein Endteil des Lagergehäuses an den die Öffnung berandenden Wandungen des Turbinengehäuses befestigbar ist.

Ferner bezieht sich die vorliegende Erfindung auf ein Verfahren zum Herstellen eines solchen Turboladers.

### Hintergrund der Erfindung

Turbolader der oben genannten Art sind beispielsweise aus der US-A-4,780,054 oder der US-A-5,146,752 bekannt.

Die Anforderungen an die Verminderung von Emissionen werden, wie bekannt, immer größer. Eine der Ursachen einer stärkeren Umweltbelastung, die es zu vermeiden gilt, ist der sogenannte "Blow-by"-Effekt, bei dem Abgase aus dem Turbinengehäuse zur Saugseite des Kompressors strömen. Diesen Strom zu unterbinden, sind schon zahlreiche Vorschläge gemacht worden. Anderseits tauchen heute in zunehmenden Maße Freizeitfahrzeuge auf (fun mobile), die gar nicht einmal unbedingt für normale Straßen gedacht sind, sondern mitten im Gelände, beispielsweise auch durch Wasserläufe oder Tümpel geführt werden. Zwar verhindert der Abgasdruck im allgemeinen das Eindringen von Wasser, doch darf das Fahrzeug unter normalen Umständen nicht bei abgestelltem Motor im Wasser belassen werden.

### Kurzfassung der Erfindung

Der Erfindung liegt die Aufgabe zugrunde, die Dichtheit an einem Turbolader zu verbessern. Zu diesem Zwecke geht sie von einem solchen der oben genannten Art aus, weil sich - wie vom Erfinder erkannt wurde - an diesem das Problem am leichtesten bewältigen läßt. Anderseits liegt ein Problem, welches bisher die Lösung verhindert hat, darin, daß das Turbinengehäuse in seinem Inneren bis auf etwa 900° aufgeheizt werden kann, wobei die bisher zu den verschiedensten Zwecken verwendeten Dichtungen versagen.

Die Lösung der oben umschriebenen Aufgabe gelingt nun erfindungsgemäß in Kombination mit den eingangs beschriebenen Merkmalen dadurch, daß im Bereich zwischen Endteil des Lagergehäuses und dem Turbinengehäuse mindestens eine hitzebeständige, aus einem Mineralstoff oder Metall bestehende Dichtung vorgesehen ist.

Ist also die Dichtung an dem am Turbinengehäuse befestigten Endteil des Lagergehäuses vorgesehen, so ist es vorteilhaft, wenn das Lagergehäuse einen Flansch aufweist, der in eine ihm entsprechende Vertiefung der Wandung des Turbinengehäuses einsetzbar ist, und daß die hitzebeständige, aus einem Mineral- oder Metallstoff bestehende Dichtung zwischen dem Flansch und der von der Wandung gebildeten Vertiefung vorgesehen ist. In diesem Falle kann die Dichtung als Ring an eine nach außen gewandte Fläche des Flansches, insbesondere an seine Umfangsfläche, gelegt sein. Die nach außen gewandte Fläche könnte allerdings auch eine Stufenfläche oder Schulter sein. Eine Alternative wäre es, die Dichtung in eine Axialnut des Flansches zu verlegen und beim Montieren am Turbinengehäuse gegen eine entsprechende Fläche desselben zu pressen. Natürlich ist es im Rahmen der Erfindung durchaus möglich, beide Lösungen gleichzeitig zu verwenden.

Der Erfinder ist nun des weiteren zu der an sich überraschenden Erkenntnis gekommen, daß ein nicht unbedeutender Leckstrom bei einem Leitgitter variabler Geometrie sich quer durch das Lager der Verstellwelle für dessen Leitschaufeln zieht. Deshalb hat es sich als günstig herausgestellt, wenn die am Lagergehäuse und/oder am Turbinengehäuse gelagerte Verstellwelle in geteilten Buchsen gelagert sind, zwischen denen die hitzebeständige, aus einem Mineralstoff oder Metall bestehende Dichtung, vorzugsweise aus Graphit, vorgesehen ist.

Wenn hier von Graphit die Rede ist, so versteht es sich, daß dieser im Falle von sich bewegenden Teilen ein Optimum darstellt, weil er ja gleichzeitig eine Schmierung bereitstellt. Anderseits können die Dichtungen im Rahmen der vorliegenden Erfindung aus Glimmer, Graphit und/oder einem Metall gebildet sein. Im Falle eines Metalles wird die Dichtung dann etwa ähnlich der Abdichtung durch einen Kolbenring in einem Verbrennungsmotor oder ähnlich einem Sprengring beschaffen sein.

Wie erwähnt, bezieht sich die Erfindung auch auf ein Verfahren zum Herstellen eines Turboladers, welches in der folgenden detaillierten Beschreibung näher erläutert wird.

### Kurzbeschreibung der Zeichnungen

Weitere Einzelheiten der Erfindung ergeben sich aus der nachfolgenden Beschreibung von in der Zeichnung schematisch dargestellten Ausführungsbeispielen. Es zeigen:
- Fig. 1: einen Schnitt durch die Längsachse eines erfindungsgemäß ausgebildeten Turboladers, von dem
- Fig. 2: eine vergrößerte Ansicht des Details II der Fig. 1, jedoch aus einem etwas anderen Winkel rund um diese Längsachse veranschaulicht;
- Fig. 3: eine bevorzugte Ausführungsvariante zu Fig. 2, wobei
- Fig. 4: das Detail IV der Fig. 3 in größerem Maßstab und während der Montage veranschaulicht; und
- Fig. 5: eine weitere Ausführungsvariante.

### Detaillierte Beschreibung der Zeichnungen

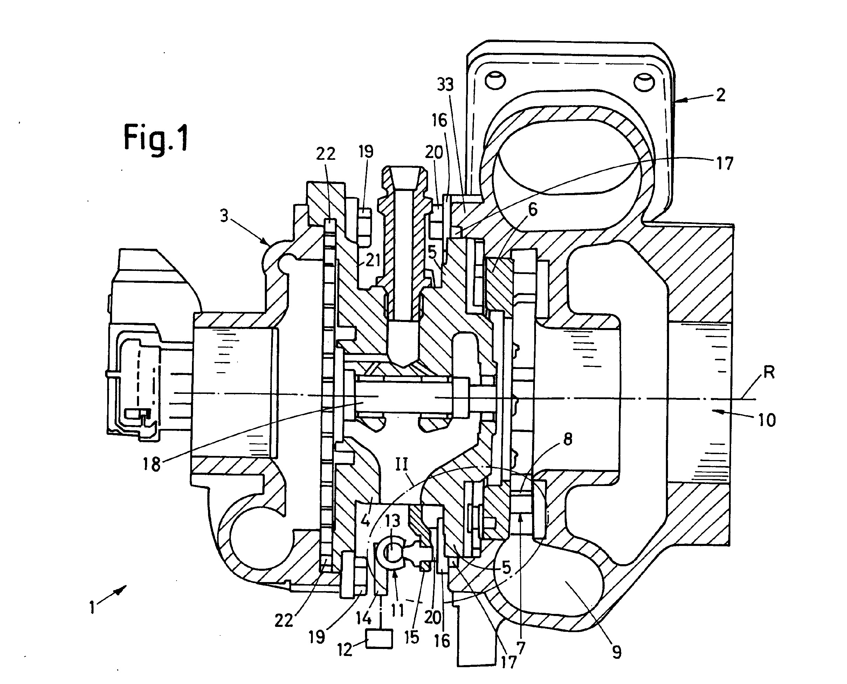

Gemäß Fig. 1 weist ein Turbolader 1 in üblicher Weise einen Turbinengehäuseteil 2, einen Lagergehäuseteil 4 und einen damit verbundenen Kompressorgehäuseteil 3 auf, die entlang einer Rotations- bzw. Längsachse R angeordnet sind, entlang welcher Achse R sich eine Welle 18 erstreckt. An jedem Ende dieser Welle 18 ist ein Rotor befestigt, nämlich ein Turbinenrotor an einem Ende innerhalb des Turbinengehäuses 2 und ein im Kompressorgehäuse 3 untergebrachter Kompressorrotor am anderen Ende.

Das Lagergehäuse 4 ist rund um die Längsachse R mittels Schraubbolzen 19 am Kompressorgehäuse 3 und mit Schraubbolzen 20 in einer durch eine Wand 33 gebildeten Öffnung am Turbinengehäuse 2 befestigt. Zwischen einem Befestigungsflansch 21 des Lagergehäuses 4 und dem Kompressorgehäuse 3 ist ein Dichtungsring 22 angeordnet, der jedoch infolge der dort herrschenden relativ geringen Temperaturen herkömmlicher Art sein kann.

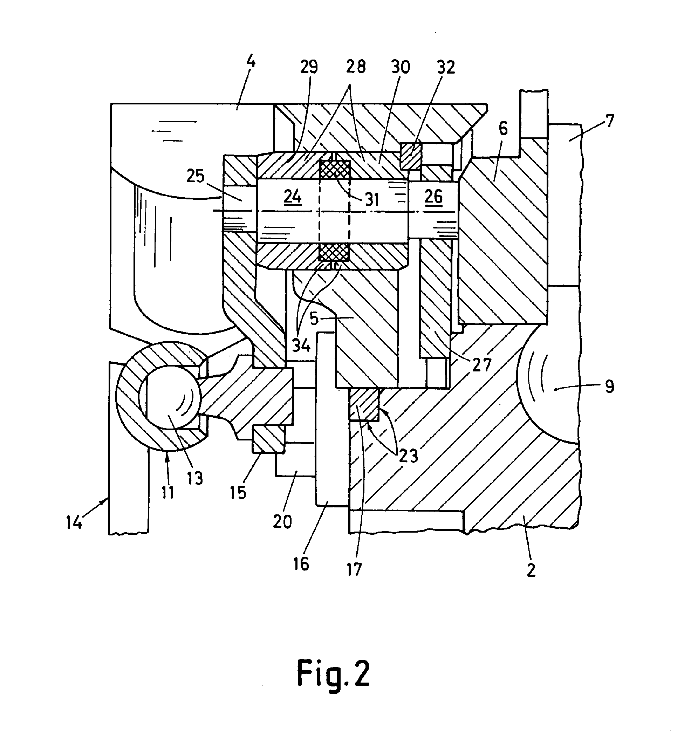

Der Turbinengehäuseteil 2 enthält einen Schaufellagerring 6 eines an sich bekannten Leitgitters variabler Geometrie mit über den Umfang verteilten Leitschaufeln 7, die um ihre den Schaufellagerring 6 durchsetzenden Schwenkachsen oder Schwenkwellen 8 verdrehbar sind, so daß sie zwischen einander Düsenquerschnitte bilden, die je nach der Lage der Leitschaufeln 7, nämlich mehr radial oder mehr tangential, größer oder kleiner sind und den in der Mitte an der Achse R gelegenen (nicht dargestellten) Turbinenrotor mehr oder weniger mit dem über einen Zufuhrkanal 9 zugeführten und über einen zentralen Stutzen 10 abgeführten Abgas eines Motors beaufschlagen, um über den Turbinenrotor einen auf derselben Welle 18 sitzenden (ebenfalls nicht dargestellten) Kompressorrotor anzutreiben. Der Mechanismus zum Verstellen der Schaufeln kann verschiedener Art sein und wird im allgemeinen von einer Steuereinrichtung 12 ausgehen, von wo aus die Steuerbewegungen einer darin befindlichen Membrane auf ein an ihr befestigtes Stösselglied 14 übertragen werden. Das Stößelglied 14 weist ein balliges Lager 11 auf, in dem ein Kurbelzapfen 13 eines Kurbelhebels 15 liegt. Der Kurbelhebel 15 ist in bekannter Weise mit einer Verstellwelle verbunden, die in Fig. 1 in einer anderen und deshalb in dieser Figur nicht sichtbaren Ebene liegt, aber in Fig. 2 gezeigt ist. Von dieser Welle aus kann dann die Steuerbewegung auf die Schwenkwellen 8 über an den Schwenkwellen 8 befestigte Hebeln, über Zahnsektoren oder auf andere, an sich bekannte Weise übertragen werden. Die Welle 18 ist in üblicher Art und an sich in beliebiger bekannter Weise im Lagergehäuse 4 gelagert, wobei die Art der Lagerung für die vorliegende Erfindung unerheblich ist.

Das Lagergehäuse 4 endet gegen das Turbinengehäuse 2 hin in einem Endflansch 5, der in eine entsprechende Vertiefung des Turbinengehäuses 2 eingesetzt wird, bevor beide Gehäuseteile 2, 4 mittels der Schraubbolzen 20 aneinander befestigt werden. Am Flansch 5 kann ein Haltering oder einfach eine Unterlagscheibe16 für den Schraubbolzen 20 entweder angeschraubt oder mit dem Flansch 5 einstückig gegossen sein. Dieser Haltering 16 hält einen im Querschnitt etwa quadratischen Dichtungsring 17 fest, der in einer entsprechend quadratischen Nut des Turbinengehäuses 2 sitzt. Der Haltering 16 kann aber auch zusätzlich zur Montage des Lagergehäuses 4 am Turbinengehäuse 2 dienen und so die axiale Lage des Lagergehäuses 4 relativ zum Turbinengehäuse 2 festlegen.

Diese Anordnung wird aus Fig. 2 deutlicher, wo man sieht deutlich den Dichtungsring 17 zwischen dem Haltering 16 und einer Schulter oder Nut 23 des Turbinengehäuses 2. Dabei liegt die Dichtung 17 an der äußeren Umfangsfläche des Flansches 5 auf, könnte aber an sich auch an seiner dem Turbinengehäuse 2 zugekehrten Fläche anliegend sein.

Selbstverständlich ist auch eine Kombination beider Möglichkeiten im Rahmen der vorliegenden Erfindung offen.

Da der Flansch 5 praktisch das Befestigungsende des Lagergehäuses 4 bildet, ist die gesamte ihm zugewandte Öffnung des Turbinengehäuses 2, in das das Lagergehäuse 4 eingeschoben ist, durch letzteres abgedeckt, während die Verbindung zwischen beiden Gehäuseteilen 2, 4 durch die Dichtung 17 abgedichtet ist. Da, wie schon erwähnt, innerhalb des Turbinengehäuses 2 sehr hohe Temperaturen herrschen, die sich natürlich auch zu dieser Verbindungsstelle bei 5, 16, 23 übertragen, ist die Dichtung 17 auch diesen hohen Temperaturen ausgesetzt, weshalb sie aus hitzebeständigem Mineralstoff oder Metall bestehen soll. Denn nur so kann sie auf die Dauer ihre Dichtfunktion erfüllen.

Wie aber eingehende Untersuchungen ergaben, kann eine Undichtheit auch über das Lager der schon erwähnten, mit dem Kurbelhebel 15 verbundenen Verstellwelle entstehen. Die Situation im Bereich dieser Verstellwelle 24 ist aus Fig. 2 ersichtlich. Demnach hat die Verstellwelle 24 an der in Fig. 2 links gezeigten Seite einen Wellenstummel 25 verringerten Durchmessers, an dem der Kurbelhebel 15 befestigt, beispielsweise aufgeschrumpft, ist. Am in Fig. 2 rechts gezeigten Ende kann die Verstellwelle 24 einen Exzenter 26 aufweisen, der sich in eine Öffnung eines Verstellringes 27 erstreckt, um durch eine Schwenkbewegung desselben in bekannter Weise eine Verstellung der Leitschaufeln 7 zu erzielen.

Diese Verstellwelle 24 ist nun also im Endflansch 5 des Lagergehäuses 4 in einer Lagerbuchse 28 gelagert. Diese Lagerbuchse 28 ist, wie ersichtlich, zweigeteilt, d.h. sie besteht aus einem linken, lagergehäuseseitigen Teil 29 und einem rechten, turbinengehäuseseitigen Teil 30. Zwischen diesen Teilen 29, 30 liegt ein Dichtungsring 31 aus Graphit oder einem anderen hitzebeständigen mineralischen, (relativ) leicht verformbaren Material.

Bei der Montage der Buchse 28 und der Welle 24 wird die Welle 24 mit von beiden Seiten des Flansches 5 eingesetzten Buchsenteilen 29, 30 und dazwischenliegendem Dichtungsring 31 eingesetzt. Der Dichtungsring 31 ist breiter bemessen als in Fig. 2 gezeigt ist und somit als zusammen mit den Buchsenteilen 29, 30 der Breite des Flansches 5 entspricht, so daß zunächst der Buchsenteil 29 über den Flansch 5 hinaus nach links und der Buchsenteil 30 nach rechts ragen wird. Wendet man anschließend Druck auf diese beiden leicht überstehenden Teile 29, 30 an, so überträgt sich dieser Druck auf den verformbaren Dichtungsring 31, der gegen die Welle und (soweit als möglich) nach oben hin ausweicht und so alle Spalte ausfüllt, die gegebenenfalls Anlaß zu Undichtheiten sein könnten. Dabei versteht es sich, daß die Verwendung eines Graphitringes 31 wegen der gleichzeitig damit erzielbaren Schmierwirkung auf die Welle 24 besonders günstig ist. Nach dem Zusammenstauchen des mineralischen Dichtungsringes 31 kann die Position eines oder beider Buchsenteile 29, 30 durch einen Keil, einen Befestigungsring 32 od.dgl. gesichert werden.

Es versteht sich, daß es möglich wäre, die Buchse 28 nur an einer Seite des Flansches 5 vorragen zu lassen, bevor Druck auf eben diese Seite ausgeübt wird. Auch versteht es sich, daß die Dichtung 31 nicht unbedingt ringförmig sein müßte, sondern einfach in den von den Randvorsprüngen 34 der Buchsenteile 29, 30 gebildeten Raum als Pulver oder Granulat eingefüllt werden kann, etwa nachdem die Verstellwelle 24 in die Buchsenteile 29, 30 eingesetzt wurde. Eine lose Füllung ist jedoch weniger vorteilhaft, weil diese stärker gestopft werden müßte. Ferner könnte es genügen, nur an einem der Teile 29, 30 einen Hohlzylinder 34, aber vorzugsweise entsprechend länger, vorzusehen. Für den Fachmann ist ebenso ersichtlich, daß die Hohlzylinder 34 - außer bei der Montage - auch den Vorteil besitzt, den auf die Teile 29, 30 und damit auf den Graphitring 31 wirkenden Preßdruck gegen die Verstellwelle 24 zu führen, weil deren Spalt zwischen ihrer Umfangsfläche und der Buchse 28 in erster Linie abzudichten ist, wogegen die Buchse 28 im allgemeinen mit Preßsitz in den Flansch 5 eingesetzt sein wird und deshalb in diesem Bereich kaum eine Undichtheit zu befürchten ist. Insofern wirken also die Randvorsprünge 34 als Leitflächen für die Ausweichbewegung des Graphits, um diesen dorthin zu leiten, wo ein möglicher Spalt abzudichten ist.

Sollte dies aber aus fabrikationstechnischen Gründen der Fall sein, ist es natürlich ohne weiteres möglich, die Randvorsprünge 34 zu verkürzen, so daß ein Spalt zwischen ihren Stirnflächen verbleibt, durch den hindurch der Mineralstoff der Dichtung 31 hindurchtreten kann. Unter Umständen können die Randvorsprünge 34 auch gänzlich weggelassen werden.

Ferner muß die Bemessung nicht unbedingt so erfolgen, daß die Buchsenteile 29, 30 zunächst über den Flansch 5 vorstehen, vielmehr könnten sie zunächst mit dem Flansch bündig abschließen und beim Aufbringen von Druck in die Flanschbohrung, vertieft, hineingepreßt werden. In dieser vertieften Position könnte die Sicherung der Lage etwa durch eine Schraube, wie eine Wurmschraube, erfolgen. Dies ist aber im allgemeinen nicht erwünscht.

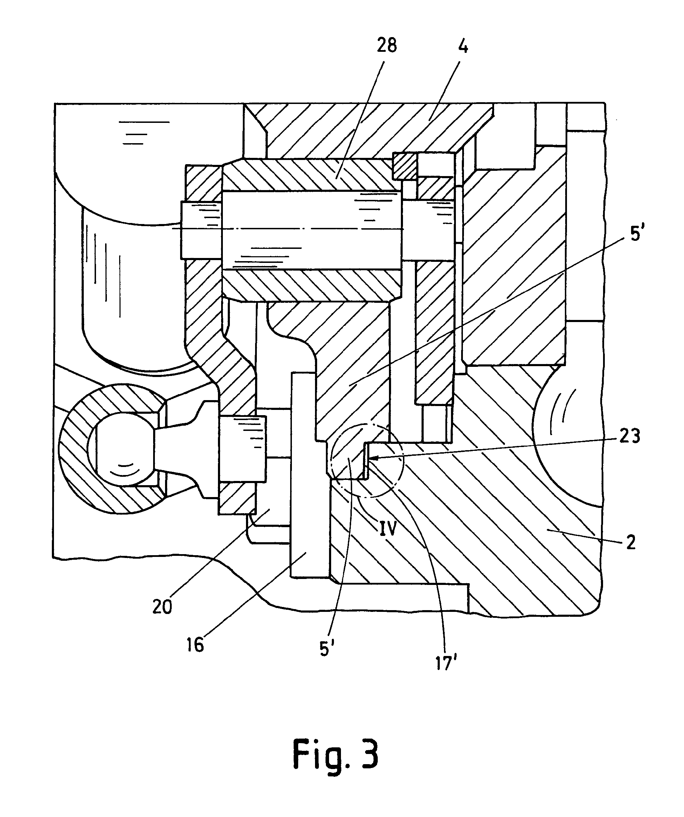

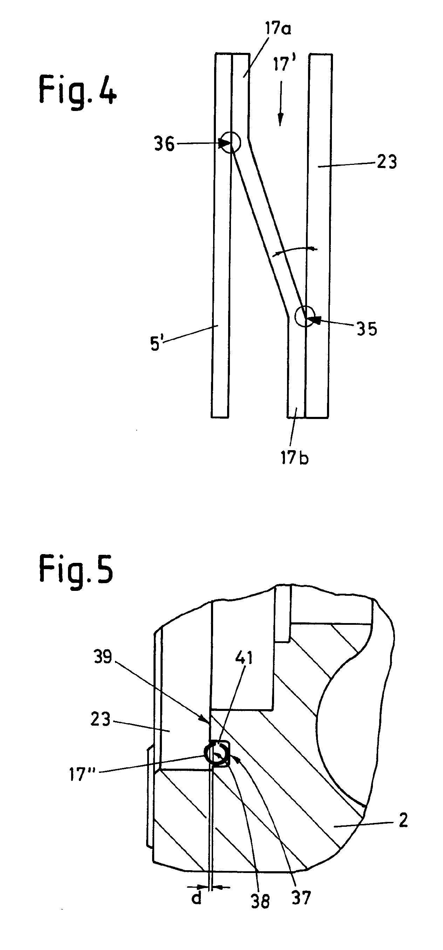

Fig. 3 ist der Fig. 2 ähnlich, doch ist an Stelle eines im Querschnitt etwa quadratischen Dichtungsringes 17 im Anschluß an den Endflansch 5 dieser letztere Endflansch 5 derart verlängert, daß ein Außenring 5' in die bereits erwähnte Nut oder Schulter 23 des Turbinengehäuses 2 ragt. Zwischen diesem Außenring 5' und der Nut 23 liegt ein im montierten Zustand flacher Dichtungsring 17'. An sich könnte dies für die Abdichtung im Bereiche IV genügen, doch wird bevorzugt ein Dichtungsring 17' verwendet, wie er im folgenden an Hand der Fig. 4 beschrieben wird. Hier sei nur noch erwähnt, daß zwar die Lagerbuchse 28 in diesem Ausführungsbeispiel einteilig ausgeführt ist, jedoch gegebenenfalls ebenso mindestens zweiteilig ausgebildet sein kann, wie dies an Hand der Fig. 2 beschrieben wurde.

In Fig. 4 ist das Detail IV der Fig. 3 in vergrößertem Maßstab während der Montage gezeigt, also während der Annäherung des Außenringes 5' an die ihm gegenüberliegende Wand der Nut 23 bei dazwischenliegendem Dichtungsring 17'. Dabei befindet sich der Dichtungsring 17' noch in einem entspannten Zustand und zeigt, daß er mindestens eine halbe, ihm eingeprägte oder auf andere Weise geformte Sicke mit zwei Wendepunkten 35, 36 aufweist, also nur eine Z-förmige, halbe Sicke (ohne Rückkehr zu einer seiner beiden - bezogen auf Fig. 4 - vertikalen Ebenen mit den Dichtungsringabschnitten 17a, 17b) bildet. Im Rahmen der Erfindung ist es zwar möglich, mindestens eine ganze Sicke, also eine Art Ausbauchung des Dichtungsringes 17', zu bilden oder sogar mehrere davon, doch wird der Vorteil der Verwendung eines Dichtungsringes 17' mit der aus Fig. 4 ersichtlichen Halbsicke nachstehend ersichtlich.

Zunächst einmal wird aus Fig. 4 ersichtlich, daß mit einer solchen Halbsicke, die beiden Abschnitte 17a, 17b flächig an den ihnen zugeordneten Flächen des Außenringes 5' bzw. der Nut 23 anliegen und daher eine relativ große Dichtungsfläche sichern (im Vergleich zu einer bloßen Ausbauchung). Dabei muß in Betracht gezogen werden, daß sich angesichts der hohen Temperaturen in diesem Bereich Silikon- oder ähnliche Dichtungen nicht verwenden lassen werden, sondern daß hier ein Flachring aus Metall verwendet werden muß. Diese metallische Flachdichtung liegt hier im Krafthauptschluß zwischen dem Endflansch 5 des Lagergehäuses 4 (vgl. die Lage des die Kraft aufbringende Schraubbolzens 20 und der die Kraft übertragenden Unterlagscheibe 16), so daß beim Anziehen des Schraubbolzens 20 die Schraubenkraft über den Endflansch 5 des Lagergehäuses 4 über den Dichtungsring 17' auf die Wandung der Nut 23 des Turbinengehäuses 2 übertragen wird. Nach dem Einbau des Dichtungsringes 17' haben Lagergehäuse 4 (bzw. sein Endflansch 5) und Turbinengehäuse 2 keinerlei Kontakt mehr miteinander, vielmehr sorgen die nun in die Position der Fig. 3 gebrachten, d.h. flachgepreßten, Abschnitte der Halbsickendichtung 17' für die Abdichtung zwischen diesen Teilen. Die Vorteile einer solchen Halbsickendichtung 17' liegen in der Möglichkeit, bereits mit geringen Vorspannkräften durch die Schraubbolzen 20 und die schmalen Auflageflächen der Abschnitte 17a, 17b, der Dichtung 17' auszukommen.

Es wurde oben erwähnt, der Dichtungsring 17 bzw. 17' könne eine Ausbauchung aufweisen. Fig. 5 zeigt nun eine besondere und günstige Ausführungsform eines ausgebauchten Dichtungsringes 17", wie er im Rahmen der Erfindung Verwendung finden kann. Dabei veranschaulicht die Fig. 5 lediglich das Turbinengehäuse 2, bevor das Lagergehäuse (4 in den vorherigen Figuren) montiert und der Endflansch in die Nut 23 eingesetzt ist. Im Bereiche dieser Nut oder Schulter 23 ist nun eine Ringnut 37 eingearbeitet. Ab dieser Nut 37 ist die radial außen liegende, gegen den (nicht gezeigten) Endflansch gerichtete Fläche 38 vorzugsweise gegenüber der dem Endflansch (5' in Fig. 3) zugekehrten Fläche 39 um ein Maß d zurückversetzt.

In die Nut 37 ist nun ein einseitig bei 40 offener gekrümmter Dichtungsring in Form eines C eingesetzt. Vorzugsweise liegt dessen schlitzartig sich über den Umfang des Dichtungsringes 17" erstreckende Öffnung 41 in einer Radialebene (bezogen auf die Achse R in Fig. 1), so daß diese Öffnung bei der Montage und auf Grund des Andruckes des Endflansches 5 des Lagergehäuses 4 definiert geschlossen wird. Es ist zweckmäßig, wenn die Öffnung 41 radial einwärts gerichtet ist. An sich wäre es sicher auch denkbar, die Öffnung 41 in Axialrichtung auszurichten, doch ist dies wegen der auf Grund des Schließdruckes beim Anziehen der Schraubbolzen 20 (vgl. Fig. 3) erhöhten Reibung, welche sich dem Schließen der Öffnung 41 entgegensetzte, nicht so vorteilhaft. Es wird dem Fachmanne einleuchten, daß eine solche Lösung dann zu bevorzugen ist, wenn bei einer Konstruktion größere abzudichtende Spalte vorliegen. Prinzipiell behindert eine solche Ausführung nicht den axialen Kontakt zwischen Lagergehäuse (4 in Fig. 3) und Turbinengehäuse 2 und ist somit im Kraftnebenschluß verbaut. Es versteht sich, daß es prinzipiell möglich wäre, die Ringnut 37 am Endflansch 5' anzubringen und den Dichtungsring 17" dort einzusetzen.

Im Rahmen der Erfindung sind zahlreiche weitere Varianten denkbar. Beispielsweise können mehr als ein Dichtungsring 17 vorgesehen werden. Die Dichtung kann überdies durch eine labyrinthartige Ausbildung ergänzt werden. Der Dichtungsring 17 kann aus einem Glimmermaterial, aus Graphit oder einem Metall in der vorher erwähnten Art ausgebildet werden.

### Bezugszeichenliste

- 1: Turbolader
- 2: Turbinengehäuse
- 3: Kompressorgehäuse
- 4: Lagergehäuse
- 5: Endflansch von 4
- 6: Schaufellagerring
- 7: Leitschaufeln
- 8: Schwenkachsen oder -wellen
- 9: Zufuhrkanal
- 10: zentraler Stutzen
- 11: balliges Lager
- 12: Steuereinrichtung
- 13: Kurbelzapfen
- 14: Stößel
- 15: Kurbelhebel
- 16: Haltering
- 17: Dichtungsring zwischen 2 und 4
- 18: Welle
- 19: Schraubbolzen
- 20: Schraubbolzen
- 21: Flansch von 4
- 22: Dichtung zwischen 3 und 4
- 23: Schulter oder Nut von 2
- 24: Verstellwelle
- 25: Wellenstummel
- 26: Exzenter
- 27: Verstellring
- 28: Lagerbuchse v. 24
- 29: Buchsenteil
- 30: Buchsenteil
- 31: Dichtungsring
- 32: Keil, Befestigungsring od.dgl.
- 33: Öffnung v. 2 bildende Wand
- 34: Randvorsprung v. 28
- 35: Wendepunkt von 17'
- 36: Wendepunkt von 17'
- 37: Ringnut
- 38: Fläche
- 39: Fläche

## Patentansprüche

1. Turbolader (1), der folgendes aufweist:
eine Welle (18),
an deren beiden Enden je ein Rotor befestigbar ist;
ein Lagergehäuse (4) zum Lagern der Welle (18); und
ein Turbinengehäuse (2), das mit einer Öffnung dem Lagergehäuse (2) gegenüberliegt, so daß ein Endteil (5) des Lagergehäuses (4) an den die Öffnung berandenden Wandungen (33) des Turbinengehäuses befestigbar ist,
**dadurch gekennzeichnet, daß**
im Bereich zwischen dem Endteil (5) des Lagergehäuses (4) und dem Turbinengehäuse (2) mindestens eine hitzebeständige, aus einem Mineralstoff oder Metall bestehende Dichtung (17, 31) vorgesehen ist.

2. Turbolader nach Anspruch 1, **dadurch gekennzeichnet, daß** das Lagergehäuse (4) einen Flansch (5) aufweist, der in eine ihm entsprechende Vertiefung in der Wandung (33) des Turbinengehäuses (2) einsetzbar ist, und daß die hitzebeständige, aus einem Mineral- oder Metallstoff bestehende Dichtung (17) zwischen dem Flansch (5) und der von der Wandung (33) gebildeten Vertiefung vorgesehen ist.

3. Turbolader nach Anspruch 2, **dadurch gekennzeichnet, daß** die Dichtung (17) als Ring an eine nach außen gewandte Fläche des Flansches (5), z.B. an seine Umfangsfläche, gelegt ist.

4. Turbolader nach Anspruch 2, **dadurch gekennzeichnet, daß** die Dichtung (17, 17', 17") als Ring an eine gegen das Turbinengehäuse (2) gewandte, also in Achsrichtung orientierte, Fläche (5') des Flansches (5) des Lagergehäuses (4) gelegt ist, und daß dieser Dichtungsring (17') vorzugsweise als Sickenring, insbesondere Halbsickenring mit zwei flach an einer jeweils zugeordneten Fläche (5' bzw. 23) des Lagergehäuses (4) und des Turbinengehäuses (2) anliegenden Abschnitten (17a, 17b), ausgebildet ist (Fig. 4).

5. Turbolader nach Anspruch 4, **dadurch gekennzeichnet, daß** der Dichtungsring (17") im Querschnitt gekrümmt ist und eine Umfangsschlitzöffnung (41) aufweist und in einer gegen eines der Gehäuse (4) offene Ringnut (37) liegt, wobei die Schlitzöffnung (41) vorzugsweise in einer Radialebene ausgerichtet ist und insbesondere radial - bezogen auf die Turbinenachse (R) - einwärts gerichtet ist.

6. Turbolader nach einem der vorhergehenden Ansprüche, **dadurch gekennzeichnet, daß** die hitzebeständige, aus einem Mineralstoff oder Metall bestehende Dichtung (17, 31) aus Glimmer, Graphit und/oder einem Metall gebildet ist.

7. Turbolader nach einem der vorhergehenden Ansprüche, **dadurch gekennzeichnet, daß** er ein Leitgitter (7) variabler Turbinengeometrie aufweist, die über eine am Lagergehäuse (4) und/oder am Turbinengehäuse (2) gelagerte Verstellwelle (24) verstellbar ist, und daß die Verstellwelle (24) in einer geteilten Buchse (28) liegt, zwischen deren Teilen (29, 30) die hitzebeständige, aus einem Mineralstoff oder Metall bestehende Dichtung (31), vorzugsweise aus Graphit, vorgesehen ist.

8. Turbolader nach Anspruch 7, **dadurch gekennzeichnet, daß** mindestens einer der Teile (29, 30) der Buchse (28) einen hohlzylindrischen Randvorsprung (34) aufweist, der die Dichtung (31) aufnimmt.

9. Verfahren zum Herstellen eine Turboladers nach einem der Ansprüche 6 oder 7, **dadurch gekennzeichnet, daß** zunächst die Verstellwelle (24) mit von beiden Seiten des Flansches (5) eingesetzten Buchsenteilen (29, 30) und dazwischenliegendem, breiter bemessenen, verformbaren Dichtungsring (31) als zusammen mit den Buchsenteilen (29, 30) der Breite des Flansches (5) eingesetzt wird, so daß zunächst wenigstens einer der Buchsenteile (29, 30) über den Flansch (5) hinaus vorragen, und daß anschließend Druck auf den jeweils überstehenden Teil (29 bzw. 30) angewandt wird, so daß sich dieser Druck auf den verformbaren Dichtungsring 31 überträgt und dieser allenfalls vorhandene Spalte ausfüllt.
